# EUROPÄISCHE PATENTSCHRIFT

(11) **EP 1 610 903 B1**
(45) Veröffentlichungstag und Bekanntmachung des Hinweises auf die Patenterteilung: **26.07.2006**
(21) Anmeldenummer: 04721483.8
(22) Anmeldetag: 18.03.2004
(51) Int. Cl.: B05B 7/00

(54) **DÜSE ZUM VERSPRÜHEN VON FLÜSSIGEN STOFFEN, DISPERSIONEN, EMULSIONEN ODER SUSPENSIONEN**
NOZZLE FOR SPRAYING LIQUID SUBSTANCES, DISPERSIONS, EMULSIONS, OR SUSPENSIONS
AJUTAGE SERVANT A PULVERISER DES SUBSTANCES LIQUIDES, DISPERSIONS, EMULSIONS OU SUSPENSIONS

(30) Priorität: 04.04.2003 DE 10315386
(43) Veröffentlichungstag der Anmeldung: 04.01.2006
(73) Patentinhaber: Glatt Ingenieurtechnik GmbH, D-99427 Weimar (DE)
(72) Erfinder: JACOB, Michael, 99427 Weimar (DE); RÜMPLER, Karlheinz, 99425 Weimar (DE); WASKOW, Mike, 99423 Weimar (DE)
(74) Vertreter: Maucher, Wolfgang
(86) Internationale Anmeldenummer: PCT/EP2004/002798
(87) Internationale Veröffentlichungsnummer: WO 2004/087330

(56) Entgegenhaltungen:
- US-A- 4 858 552

## Beschreibung

Die Erfindung betrifft eine Düse zum Versprühen von flüssigen Stoffen, Dispersionen, Emulsionen oder Suspensionen mit den im Patentanspruch 1 genannten Merkmalen.

Düsenkonstruktionen zum Versprühen von flüssigen Stoffen, Dispersionen, Emulsionen oder Suspensionen in eine Wirbelschichtgranulieranlage sind allgemein bekannt. Die jeweiligen Düsenkonstruktionen sind insbesondere an das Anwendungsgebiet der in der Wirbelschichtgranulieranlage herzustellenden Materialien angepasst. So sind beispielsweise Zweistoffdüsen bekannt, die in der Regel aus einem zentral angeordneten Innenrohr und einem dazu beabstandeten Außenrohr bestehen. Dem Innenrohr wird der in die Wirbelschicht zu versprühende flüssige Stoff zugeführt, während dem Außenrohr ein Zerstäubungsgas zugeführt wird. Eine solche Düsenkonstruktion gemäß des Oberbegriffs des Anspruchs 1 ist aus US 4 858 552 bekannt.

Entsprechend dem herzustellenden Material ist es auch bekannt, die Düse als Drei- oder Vierstoffzerstäuberdüse oder allgemein als Mehrstoffzerstäuberdüse auszubilden. Dabei werden in den jeweiligen entstehenden Zwischenräumen zwischen den einzelnen Rohren oder Kanälen die unterschiedlich zu verdüsenden Materialien und das Zerstäubungsgas zugeführt.

Nachteilig bei diesen Düsen ist ihre schwierige Reinigung, da die Düsen schwer zugänglich sind und zur Reinigung mit hohem Aufwand ausgebaut werden müssen. Insbesondere im Lebensmittelbereich und in anderen hygieneintensiven Bereichen sowie in der chemischen Industrie werden hohe Ansprüche an die Sauberkeit der Anlage gestellt, so dass es erforderlich ist die Düsen öfters einem Reinigungsvorgang zu unterwerfen.

Aufgabe der Erfindung ist es, eine gattungsgemäße Düse insbesondere für den Einsatz in der Lebensmittel- und chemischen Industrie zu schaffen, die sich durch eine gute Zugänglichkeit auszeichnet und die ohne großen Aufwand für einen erforderlichen Reinigungsvorgang leicht demontierbar und montierbar ist.

Diese Aufgabe wird erfindungsgemäß durch die kennzeichnenden Merkmale des Patentanspruches 1 gelöst.

Dadurch, dass das Innenrohr der Düse in einem Aufnahmeblock gelagert ist, der in einem fest am unteren Bereich eines Lanzengrundkörpers angeordneten Rohr lösbar befestigt und mit dem Innenrohr und den eventuell daran befestigten Anbauteilen aus diesem herausnehmbar ist, und dass am unteren Bereich des Außenrohres der Düse eine Befestigungsvorrichtung angeordnet ist, die die Düse lösbar mit dem Prozessgehäuse der Wirbelschichtgranulieranlage verbindet, wird erreicht, dass mit wenigen Handgriffen die Düse demontierbar ist und die Einzelteile einer entsprechenden Reinigung unterzogen werden können. Durch die Anordnung der entsprechenden Befestigungsmittel ist auch eine gute Zugänglichkeit zu diesen gegeben, so dass die Düse schnell aus- und auch wieder eingebaut werden kann.

Weitere vorteilhafte Ausgestaltungen sind in den Unteransprüchen beschrieben, sie werden in der Beschreibung zusammen mit ihrer Wirkung erläutert.

Die Erfindung wird nachfolgend anhand eines Ausführungsbeispiels näher erläutert. In der dazugehörigen Zeichnung ist eine Düse zum Versprühen von flüssigen Stoffen, Dispersionen, Emulsionen oder Suspensionen in eine Wirbelschichtgranulieranlage schematisch dargestellt.

Die erfindungsgemäße Lösung wird erläutert an einer an sich bekannten Zweistoffdüse. Die erfindungsgemäße Lösung ist auch analog einsetzbar für Drei- oder Vierstoffdüsen.

Die an sich bekannte Zweistoffdüse besteht aus einem zylinderförmigen Düsenkörper, der aus ein zentrales Innenrohr 3 und einem dazu beabstandeten Außenrohr 2 gebildet wird, und einem Düsenmundstück 1. Das Innenrohr 3 ist mit seinem unteren Ende mit einer Zuführung für das zu versprühende Material verbunden, während das Zerstäubungsgas über den zwischen Innenrohr 3 und dem Außenrohr 2 entstandenen Zwischenraum dem Düsenmundstück 1 zugeführt wird.

Erfindungsgemäß ist das Innenrohr 3 in einem Aufnahmeblock 11 gelagert, der in einem fest am unteren Bereich eines Lanzengrundkörpers 9 angeordnetem Rohr 10 befestigt ist. Der Aufnahmeblock 11 ist lösbar, beispielsweise mittels einer Tri-Clamp-Befestigung 12 an dem Rohr 10 befestigt, so dass der Aufnahmeblock 11 mit dem Innenrohr 3 und den daran befestigten Anbauteilen 6 nach dem Lösen der Befestigung 12 zu Reinigungszwecken aus der Düse herausgezogen werden kann. Die Befestigung des Innenrohrs 3 am Aufnahmeblock 11 kann im einfachsten Fall durch Verschweißen des Innenrohrs 3 mit dem Aufnahmeblock 11 erfolgen. Besonders vorteilhaft ist, das Innenrohr 3 in dem Aufnahmeblock 11 einzuschrauben. Dadurch besteht die Möglichkeit, die axiale Position des Innenrohrs 3, bzw. eines noch näher zu erläuternden Flüssigkeitseinsatzes 4, im Bereich des Düsenmundstücks 1 zum Außenrohr 2 variabel einzustellen. Durch die Verstellung des Innenrohrs 3 in axialer Richtung kann von Außen der Sprühwinkel und das Sprühbild der Düse stufenlos verstellt werden. Bei einer derartigen Verstellmöglichkeit des Innenrohrs 3 ist die Dichtung 14 zwischen dem Aufnahmeblock 11 und dem Innenrohr 3 innerhalb des Lanzengrundkörpers 9 als Metallkompensator oder als elastischer O-Ring ausgebildet, um so den gesamten Stellweg hygienegerecht abdichten zu können.

Zur Realisierung von unterschiedlichen Sprühbedingungen ist im Bereich des Düsenmundstücks 1 das Innenrohr 3 mit einem auswechselbaren Flüssigkeitseinsatz 4 versehen. Die Dichtung zwischen dem auswechselbaren Flüssigkeitseinsatz 4 und dem Innenrohr 3 erfolgt in vorteilhafter Weise mittels eines einfachen Metalldichtsatzes 5, um Dichtungsmaterialien zu vermeiden. Im Bereich des Düsenmundstücks 1 ist im Ringspalt zwischen Außenrohr 2 und dem Flüssigkeitseinsatz 4 oder dem Innenrohr 3 ein Anbauteil 6 in Form von Drallkörpern, Drallblechen oder dgl. angeordnet. Diese Anbauteile 6 dienen zur Führung der Druckluft und zur Führung des Innenrohres 3. Das Anbauteil 6 ist mit dem Innenrohr 3 oder alternativ mit dem Flüssigkeitseinsatz 4 oder dem Außenrohr 2 fest verbunden.

Die Befestigung der Düse am Prozessgehäuse 15 der Wirbelschichtgranulieranlage erfolgt über eine Befestigungsvorrichtung 8, die im unteren Bereich des Außenrohres 2 angeordnet ist. Die lösbare Befestigung der Düse am Prozessgehäuse 15 erfolgt beispielsweise mittels einer Milchrohr-Überwurfmutter 7 der mittels einer Tri-Clamp-Befestigung. Die Befestigungsvorrichtung 8 ist dabei fest oder verstellbar über eine Klemmhülse mit dem Außenrohr 2 verbunden. Zwischen dem Außenrohr 2 und der Befestigungsvorrichtung 8 sowie zwischen dem Prozessgehäuse 15 und der Befestigungsvorrichtung 8 ist jeweils eine Dichtung 16 angeordnet. Als Dichtung 16 können O-Ringe oder andere Hygieneabdichtungen verwendet werden.

Durch die erfindungsgemäße Befestigung der Düse am Prozessgehäuse 15 kann die Düse zwecks Reinigung schnell und mit geringem Aufwand aus dem Prozessgehäuse 15 ab- und auch wieder angebaut werden.

Das Außenrohr 2 ist lösbar, beispielsweise über eine Tri-Clamp-Befestigung 13, mit dem Lanzengrundkörper 9 verbunden, wodurch ebenfalls eine schnelle und unkomplizierte Demontage und Montage der Teile gegeben ist. Das Außenrohr 3 ist im Bereich des Anschlusses an den Lanzengrundkörper 9 mit einem sich erweiternden Durchmesser ausgebildet. In den Grundkörper 9 mündet eine Zuführung für das Zerstäubungsgas oder für den Stützgasstrom.

### Zusammenfassend lässt sich folgendes feststellen:

Die Erfindung betrifft eine Düse zum Versprühen von flüssigen Stoffen, Dispersionen, Emulsionen oder Suspensionen in eine Wirbelschichtgranulieranlage, gemäß den Ansprüchen.

Aufgabe der Erfindung ist es, eine gattungsgemäße Düse insbesondere für den Einsatz in der Lebensmittel- und chemischen Industrie zu schaffen, die sich durch eine gute Zugänglichkeit auszeichnet und die ohne großen Aufwand für einen erforderlichen Reinigungsvorgang leicht demontierbar und montierbar ist.

Erfindungsgemäß wird das dadurch erreicht, dass das Innenrohr der Düse in einem Aufnahmeblock gelagert ist, der in einem fest am unteren Bereich eines Lanzengrundkörpers angeordneten Rohr lösbar befestigt und mit dem Innenrohr und den eventuell daran befestigten Anbauteilen aus diesem herausnehmbar ist, und dass am unteren Bereich des Außenrohres der Düse eine Befestigungsvorrichtung angeordnet ist, die die Düse lösbar mit dem Prozessgehäuse der Wirbelschichtgranulieranlage verbindet.

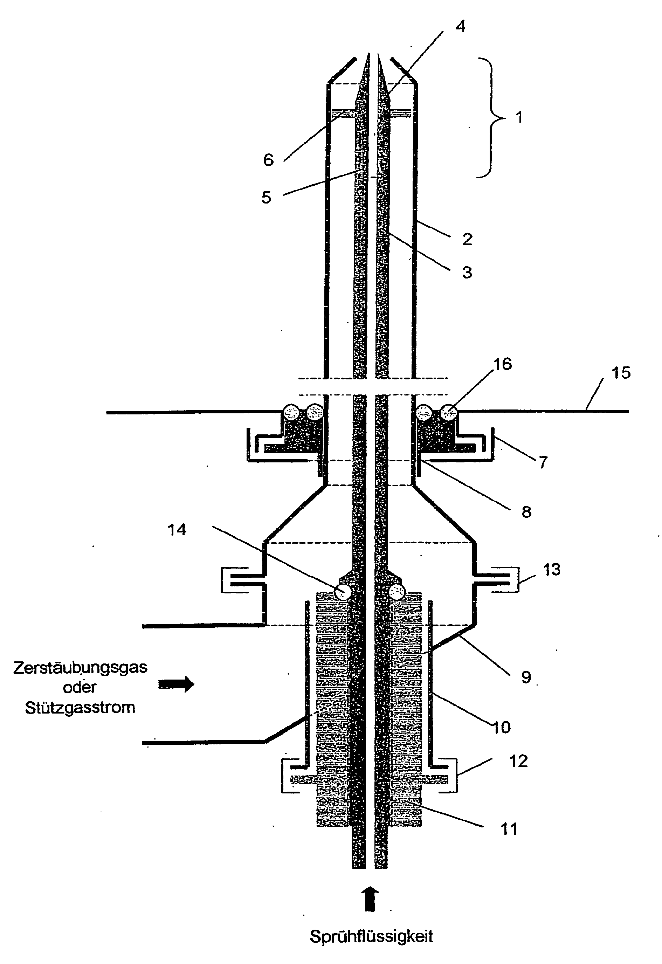

## Patentansprüche

1. Düse zum Versprühen von flüssigen Stoffen, Dispersionen, Emulsionen oder Suspensionen, insbesondere von hochviskosen Medien, besonders aus der Lebensmittel- und chemischen Industrie für den Einsatz in Wirbelschichtgranulieranlagen, mit folgender Bauart:
- die Düse besteht aus einem zylinderförmigen Düsenkörper und einem Düsenmundstück,
- der Düsenkörper besteht aus einem zentral angeordneten Innenrohr und einem zum Innenrohr beabstandeten Außenrohr,
- das Innenrohr ist mit einer Zuführung für den zu versprühenden Stoff verbunden,
- das Außenrohr ist mit einer Zuführung für ein Zerstäubungsgas oder einem Stützgasstrom verbunden und bildet im unteren Bereich einen Lanzengrundkörper,
**dadurch gekennzeichnet, dass** das Innenrohr (3) in einem Aufnahmeblock (11) gelagert ist, der in einem fest am unteren Bereich eines Lanzengrundkörpers (9) angeordneten Rohr (10) lösbar befestigt und mit dem Innenrohr (3) und den eventuell daran befestigten Anbauteilen (6) aus diesem herausnehmbar ist, und dass am unteren Bereich des Außenrohres (2) eine Befestigungsvorrichtung (8) angeordnet ist, die die Düse lösbar mit dem Prozessgehäuse (15) der Wirbelschichtgranulieranlage verbindet.

2. Düse nach Anspruch 1, **dadurch gekennzeichnet, dass** zwischen dem Aufnahmeblock (11) und dem Innenrohr (3) innerhalb des Lanzengrundkörpers (9) eine Dichtung (14) angeordnet ist.

3. Düse nach Anspruch 1 und 2, **dadurch gekennzeichnet, dass** zwischen dem Außenrohr (2) und der Befestigungsvorrichtung (8) sowie zwischen dem Prozessgehäuse (15) und der Befestigungsvorrichtung (8) jeweils eine Dichtung (16) angeordnet ist.

4. Düse nach Anspruch 1 bis 3, **dadurch gekennzeichnet, dass** im Bereich des Düsenmundstücks (1) das Innenrohr (3) mit einem Flüssigkeitseinsatz (4) über einen Metalldichtsatz (5) auswechselbar verbunden ist.

5. Düse nach Anspruch 1 bis 4, **dadurch gekennzeichnet, dass** im Bereich des Düsenmundstücks (1) im Ringspalt zwischen dem Außenrohr (2) und dem Flüssigkeitseinsatz (4) oder dem Innenrohr (3) ein Anbauteil (6) in Form von Drallkörpern, Drallblechen oder dgl. zur Druckluftführung und zur Führung des Innenrohres (3) angeordnet ist und mit dem Innenrohr (3) oder dem Flüssigkeitseinsatz (4) oder dem Außenrohr (2) fest verbunden ist.

6. Düse nach Anspruch 1 bis 5, **dadurch gekennzeichnet, dass** die Befestigung der Düse am Prozessgehäuse (15) mittels einer Milchrohr-Überwurfmutter (7) oder mittels einer Tri-Clamp-Befestigung erfolgt.

7. Düse nach Anspruch 1 bis 6, **dadurch gekennzeichnet, dass** das Außenrohr (2) lösbar, beispielsweise über eine Tri-Clamp-Befestigung (13), mit dem Lanzengrundkörper (9) verbunden ist.

8. Düse nach Anspruch 1 bis 7, **dadurch gekennzeichnet, dass** das Außenrohr (2) im Bereich des Anschlusses zum Lanzen grundkörper (9) mit einem sich erweiternden Durchmesser ausgebildet ist.

9. Düse nach Anspruch 1 bis 8, **dadurch gekennzeichnet, dass** der Aufnahmeblock (11) mit dem Rohr (10) über eine lösbare Verbindung, beispielsweise einer Tri-Clamp-Befestigung (12), verbunden ist.

10. Düse nach Anspruch 1 bis 9, **dadurch gekennzeichnet, dass** das Innenrohr (3) zur Einstellung des Sprühwinkels und des Sprühbildes in der Längsachse verstellbar in dem Aufnahmeblock (11) einschraubbar ist, wobei die Dichtung (14) zum Ausgleich des Verstellweges als Metallkompensator oder als elastischer O-Ring ausgebildet ist.

11. Düse nach Anspruch 1 bis 9, **dadurch gekennzeichnet, dass** das Innenrohr (3) mit dem Aufnahmeblock (11) verschweißt ist.

## Claims

1. Nozzle for spraying liquid substances, dispersions, emulsions or suspensions, particularly highly viscous media, particularly from the food and chemical industries, for use in fluidised bed granulating equipment, having the following construction:
- the nozzle consists of a cylindrical nozzle member and a nozzle mouthpiece,
- the nozzle member consists of a centrally disposed inner tube and an outer tube at a spacing from the inner tube,
- the inner tube is connected to a feed for the substance which is to be sprayed,
- the outer tube is connected to a feed for an atomising gas or a support gas current and forms a lance base member in the lower region,
**characterised in that** the inner tube (3) is mounted in a receiving block (11) which is detachably fastened in a tube (10) fixedly mounted on the lower part of a lance base member (9) and is removable therefrom with the inner tube (3) and any add-on parts (6) attached thereto, and **in that** at the lower part of the outer tube (2) is provided a fixing device (8) which releasably connects the nozzle to the process housing (15) of the fluidised bed granulating equipment.

2. Nozzle according to Claim 1, **characterised in that** a seal (14) is disposed between the receiving block (11) and the inner tube (3) inside the lance base member (9).

3. Nozzle according to Claims 1 and 2, **characterised in that** a seal (16) is provided between the outer tube (2) and the fixing device (8) and between the process housing (15) and the fixing device (8).

4. Nozzle accordingly to Claims 1 to 3, **characterised in that** the inner tube (3) is connected to a liquid insert (4) through a metal sealing unit (5) in the region of the nozzle mouthpiece (1).

5. Nozzle according to Claims 1 to 4, **characterised in that** in the region of the nozzle mouthpiece (1), in the annular gap between the outer tube (2) and the liquid insert (4) or at the inner tube (3), is mounted an add-on part (6) in the form of a swirl member, swirl baffle or the like for guiding the compressed air and for guiding the inner tube (3) and said add-on part (6) is fixedly connected to the inner tube (3) or to the liquid insert (4) or to the outer tube (2).

6. Nozzle according to Claims 1 to 5, **characterised in that** the nozzle is attached to the process housing (15) by means of a milk tube check nut (7) or by means of a tri-clamp fixing.

7. Nozzle according to Claims 1 to 6, **characterised in that** the outer tube (2) is releasably connected to the lance base member (9), e.g. by means of a tri-clamp fixing (13).

8. Nozzle according to Claims 1 to 7, **characterised in that** the outer tube (2) is constructed with an expanding diameter in the region of the connection to the lance base member (9).

9. Nozzle according to Claims 1 to 8, **characterised in that** the receiving block (11) is connected to the tube (10) via a releasable connection, e.g. a tri-clamp fixing (12).

10. Nozzle according to Claims 1 to 9, **characterised in that** the inner tube (3) can be screwed into the receiving block (11) to a variable degree along its longitudinal axis in order to adjust the spray angle and the spray pattern, the seal (14) for compensating the adjustment distance being in the form of a metal compensator or a flexible O-ring.

11. Nozzle according to Claims 1 to 9, **characterised in that** the inner tube (3) is welded to the receiving block (11).

## Revendications

1. Ajutage ou base pour à pulvériser des substances liquides, dispersions, émulsions ou suspensions, en particulier des milieux très visqueux, particulièrement issus de l'industrie alimentaire et chimique pour l'utilisation dans des installations de granulation en lit fluidisé, avec le type de construction suivant :
- l'ajutage se compose d'un corps d'ajutage cylindrique et d'un nez d'ajutage,
- le corps d'ajutage se compose d'un tube intérieur disposé centralement et d'un tube extérieur distant du tube intérieur,
- le tube intérieur est relié à une conduite d'alimentation destinée à la substance à pulvériser,
- le tube extérieur est relié à une conduite d'alimentation destinée à un gaz d'atomisation ou à un flux de gaz support et forme dans la zone inférieure un corps de base de lance,
**caractérisé en ce que** le tube intérieur (3) est logé dans un bloc de réception (11), qui est fixé de manière amovible dans un tube (10) disposé de manière fixe sur la zone inférieure d'un corps de base de lance (9), et qui peut être ôté de celui-ci avec le tube intérieur (3) et les pièces rapportées (6) fixées éventuellement dessus, et **en ce qu'**au niveau de la zone inférieure du tube extérieur (2) est disposé un dispositif de fixation (8) qui relie l'ajutage de manière amovible au boîtier de processus (15) de l'installation de granulation en lit fluidisé.

2. Ajutage selon la revendication 1, **caractérisé en ce qu'**un joint d'étanchéité (14) est disposé entre le bloc de réception (11) et le tube intérieur (3) à l'intérieur du corps de base de lance (9).

3. Ajutage selon la revendication 1 et 2, **caractérisé en ce qu'**un joint d'étanchéité (16) est disposé à chaque fois entre le tube extérieur (2) et le dispositif de fixation (8) ainsi qu'entre le boîtier de processus (15) et le dispositif de fixation (8).

4. Ajutage selon la revendication 1 à 3, **caractérisé en ce que**, dans la zone du nez d'ajutage (1), le tube intérieur (3) est relié de manière interchangeable à un insert à liquide (4) par le biais d'un ensemble d'étanchéité métallique (5).

5. Ajutage selon la revendication 1 à 4, **caractérisé en ce que** dans la zone du nez d'ajutage (1), dans l'interstice annulaire entre le tube extérieur (2) et l'insert à liquide (4) ou le tube intérieur (3), est disposée une pièce rapportée (6) sous la forme de corps à tourbillon, d'aubes à tourbillon ou similaires pour le guidage de l'air comprimé et pour le guidage du tube intérieur (3), et est reliée de manière fixe au tube intérieur (3) ou à l'insert à liquide (4) ou au tube extérieur (2).

6. Ajutage selon la revendication 1 à 5, **caractérisé en ce que** l'ajutage est fixé au boîtier de processus (15) au moyen d'un écrou d'accouplement de tube à lait (7) ou au moyen d'une fixation TriClamp.

7. Ajutage selon la revendication 1 à 6, **caractérisé en ce que** le tube extérieur (2) est relié de manière amovible, par exemple par une fixation TriClamp (13), au corps de base de lance (9).

8. Ajutage selon la revendication 1 à 7, **caractérisée en ce que** le tube extérieur (2) est formé dans la zone du raccord au corps de base de lance (9) avec un diamètre qui s'élargit.

9. Ajutage selon la revendication 1 à 8, **caractérisé en ce que** le bloc de réception (11) est relié au tube (10) au moyen d'une liaison amovible, par exemple une fixation TriClamp (12).

10. Ajutage selon la revendication 1 à 9, **caractérisé en ce que** le tube intérieur (3) mobile dans l'axe longitudinal peut être vissé dans le bloc de réception (11) pour régler l'angle de pulvérisation et l'image de pulvérisation, le joint d'étanchéité (14) étant réalisé comme compensateur métallique ou joint torique élastique pour compenser la course de réglage.

11. Ajutage selon la revendication 1 à 9, **caractérisé en ce que** le tube intérieur (3) est soudé au bloc de réception (11).
